# EUROPEAN PATENT APPLICATION

(11) **EP 4 844 328 A2**
(43) Date of publication of application: **25.11.2026**
(21) Application number: 26174721.6
(22) Date of filing: 27.04.2026
(51) Int. Cl.: G01B 3/1007, G01B 3/1005

(54) **TAPE MEASURE WITH IMPROVED SLIDE LOCK DESIGN**

(30) Priority: 30.04.2025 US 202563797406 P
(71) Applicant: Stanley Black & Decker, Inc., New Britain, CT 06053 (US)
(72) Inventor: YI-CHAN, Shih, Taichung City (TW); HSIAO TING, Wen, Taichung City (TW); HUI-TING, You, Taichung City (TW)
(74) Representative: Gill Jennings & Every LLP

(57) **Abstract**

Provided herein is a tape measure including a housing, a reel, an elongated tape wound on the reel and extendable through a housing opening, and a slide lock movable between a lock position and a non-contact position to hold the tape extended outwardly from the opening and to release the tape. The slide lock includes a locking arm movable into wedging engagement with the tape when the slide lock is in the holding position, a finger engaging member actuatable by a user to move the slide lock between the non-contact and holding positions, and a release switch positioned on the finger engaging member and actuatable between a lock position and release position. The release switch selectively engages and disengages the housing when in the lock and non-contact positions, respectively, to retain the slide lock in the holding position or enable movement of the slide lock back to the non-contact position.

## Description

### BACKGROUND OF THE INVENTION

### Field of the Invention

The present disclosure relates generally to hand tools and, more particularly, to tape measures.

### Description of Related Art

Tape measures conventionally include a retractable tape having measuring indicia thereon that is spring-biased into a housing. A front of the tape commonly includes a hook that provides a surface to engage and fix the end of the tape against a point to be measured from, so the measurement can be made from the hook to a position on the tape indicated by the measuring indicia. The housing often has a slide lock mechanism that allows the tape to be locked into a certain position relative to the housing (e.g., locked into an extended position, preventing the spring bias from retracting the tape into the housing). The slide lock mechanism is movable along a housing of the tape measure in opposite directions between a non-contact position and a holding position, with the slide lock mechanism brought into wedging engagement with the tape to engage and hold the tape against an interior holding structure on the housing when the slide lock mechanism is in the holding position.

Among other things, the present disclosure relates to various improvements to tape measures, including to features that reduce the feeling of resistance in the operation of the slide lock mechanism.

### SUMMARY OF THE INVENTION

Provided herein is a tape measure including a housing, a reel rotatably mounted in the housing, an elongated tape arranged to be wound on the reel and to be extendable through a tape opening formed in the housing, and a slide lock operable to hold the tape in any position of extension outwardly of the tape opening and to release the tape from any position in which it is held, the slide lock mounted on the housing for movement in opposite directions between a non-contact position and a holding position. The slide lock includes a locking arm movable into wedging engagement with the tape to engage and hold the tape against an interior holding structure on the housing when the slide lock is in the holding position, a finger engaging member configured to be actuated by a user to selectively move the slide lock from the non-contact position to the holding position, and a release switch positioned on the finger engaging member and being actuatable between a lock position and a release position. With the release switch in the lock position, the release switch engages the housing to retain the slide lock in the holding position and, with the release switch in the release position, the release switch disengages from the housing to enable movement of the slide lock from the holding position back to the non-contact position.

In certain configurations, the release switch comprises a housing engagement member, a biasing member, and a button depressible by the user, wherein depression of the button causes a corresponding movement of the housing engagement member and the biasing member, to actuate the release switch between the lock position and the release position.

In certain configurations, wherein the release switch comprises a first piece comprising the housing engagement member and the biasing member, and a second piece comprising the button, with the first piece and second pivotably connected via a pivot pin.

In certain configurations, the slide lock further comprises a pivot pin that pivotably connects the release switch to the finger engaging member, with the release switch pivoting between the lock position and the release position.

In certain configurations, the housing engagement member comprises an engagement arm and the biasing member comprises a biasing arm.

In certain configurations, the biasing arm comprises a flexible arm that is configured to deflect from a default position to a deflected position, responsive to depression of the button by the user.

In certain configurations, when the slide lock is moved to the holding position and the biasing arm is in the default position, the engagement arm is biased to engage a snap point of the housing, to secure the slide lock in the holding position, and wherein when the button is depressed to actuate the biasing arm to the deflected position, the engagement arms are disengaged from the snap point of the housing, to enable movement of the slide lock from the holding position to the non-contact position.

In certain configurations, the locking arm comprises an interior locking arm positioned within an interior cavity of the housing and the actuating member comprises an exterior actuating member positioned on an outer surface of the housing, with the housing comprising a slot within which a portion of the slide lock is positioned and that provides for movement of the slide lock from the non-contact position to the holding position.

In certain configurations, the housing comprises a track within which the slide lock slides to move from the non-contact position to the holding position, with the slot formed within the track.

In certain configurations, with the slide lock in the non-contact position, the engagement arm are positioned on an outer surface of the track and ride along the track, and wherein when the slide lock is moved to the holding position with the biasing arm in the default position, the engagement arm is biased to snap into the slot and engage the snap point of the housing, thereby preventing movement of the slide lock back to the non-contact position.

In certain configurations, the locking arm comprises an arcuate arm having a contouring generally matching that of an inner surface of the housing.

In certain configurations, the release switch extends through an opening formed in the finger engaging member, with the release switch surrounded by the finger engaging member.

Also provided herein is a tape measure comprising a housing, a reel rotatably mounted in the housing, an elongated tape arranged to be wound on the reel and to be extendable through a tape opening formed in the housing, and a slide lock operable to hold the tape in any position of extension outwardly of the tape opening and to release the tape from any position in which it is held, the slide lock mounted on the housing for movement in opposite directions between a non-contact position and a holding position. The slide lock includes a locking arm movable into wedging engagement with the tape to engage and hold the tape against an interior holding structure on the housing when the slide lock is in the holding position and a finger engaging member configured to be actuated by a user to selectively move the slide lock from the non-contact position to the holding position. The locking arm comprises a main arm member having an arcuate shape and being movable along an arcuate path to move the slide lock between the non-contact position and the holding position, the main arm member having an outer surface and an inner surface and being curved outwardly in a first direction. The locking arm also comprises a support arm member positioned on the inner surface of the main arm member, the support arm member having an arcuate shape and being curved inwardly in a second direction opposite from the first direction.

In certain configurations, the main arm member comprises a fixed end portion joined to the finger engaging member and a free end portion opposite from the fixed end portion, with the free end portion movable into wedging engagement with the tape to engage and hold the tape when the slide lock is in the holding position.

In certain configurations, the support arm member extends between the free end portion and a middle portion of the main arm member that is between the fixed end portion and the free end portion.

In certain configurations, movement of the main arm member along the arcuate path and to the holding position applies a downward-directed force and an inward-directed force to the tape when engaging and holding the tape against the interior holding structure on the housing, and the support arm member applies another downward-directed force to the tape as the main arm member engages and holds the tape against the interior holding structure on the housing, with the another downward-directed force adding to the downward-directed force to engage and hold the tape against the interior holding structure on the housing when the slide lock is in the holding position.

In certain configurations, the main arm member comprises an opening formed therein extending a majority of a distance between the middle portion and the free end portion.

In certain configurations, the support arm member comprises a pair of spaced apart support arms, with the pair of spaced apart support arms extending across the opening of the main arm member.

In certain configurations, the opening reduces a magnitude of the inward-directed force applied to the tape when engaging and holding the tape against the interior holding structure on the housing when the slide lock is in the holding position.

In certain configurations, the free end portion comprises a pair of transversely spaced teeth defining a central recess, the pair of transversely spaced teeth engaging the tape when the slide lock is in the holding position.

### BRIEF DESCRIPTION OF THE DRAWINGS

FIG. 1 is a perspective view of a tape measure, in accordance with an aspect of the disclosure;
FIG. 2 is a front elevational view of the tape measure of FIG. 1;
FIG. 3 is a side elevational view of the tape measure of FIG. 1, showing the slide lock of the tape measure in a non-contact position;
FIG. 4 is a cross-sectional view of the tape measure taken along line 4-4 of FIG. 2, showing the slide lock of the tape measure in the non-contact position;
FIG. 5 is a side elevational view of the tape measure of FIG. 1, showing the slide lock of the tape measure in a lock position;
FIG. 6 is a cross-sectional view of the tape measure taken along line 4-4 of FIG. 2, showing the slide lock of the tape measure in the lock position;
FIG. 7 is an exploded view of a slide lock included in the tape measure of FIG. 1;
FIGS. 8A and 8B are front and rear perspective views of the slide lock, showing a release switch of the slide lock in a lock position; and
FIGS. 9A and 9B are front and rear perspective views of the slide lock, showing a release switch of the slide lock in a release position.

### DETAILED DESCRIPTION OF THE INVENTION

The following description is provided to enable those skilled in the art to make and use the described embodiments contemplated for carrying out the invention. Various modifications, equivalents, variations, and alternatives, however, will remain readily apparent to those skilled in the art. Any and all such modifications, variations, equivalents, and alternatives are intended to fall within the spirit and scope of the present invention.

For purposes of the description hereinafter, the terms "upper", "lower", "right", "left", "vertical", "horizontal", "top", "bottom", "lateral", "longitudinal", and derivatives thereof shall relate to the invention as it is oriented in the drawing figures. However, it is to be understood that the invention may assume various alternative variations, except where expressly specified to the contrary. It is also to be understood that the specific devices illustrated in the attached drawings, and described in the following specification, are simply exemplary embodiments of the invention. Hence, specific dimensions and other physical characteristics related to the embodiments disclosed herein are not to be considered as limiting.

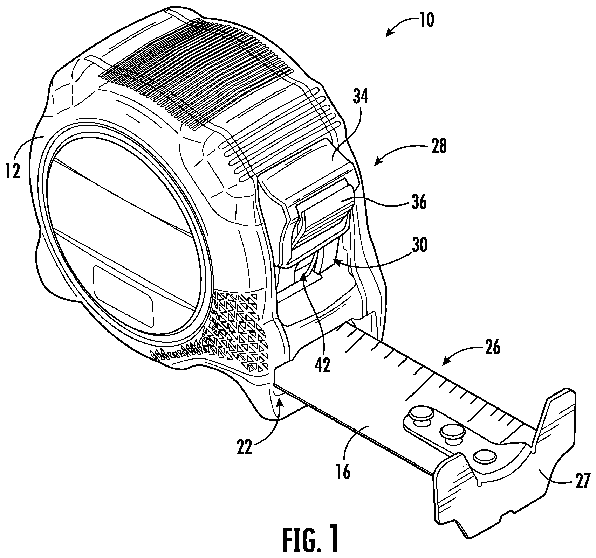

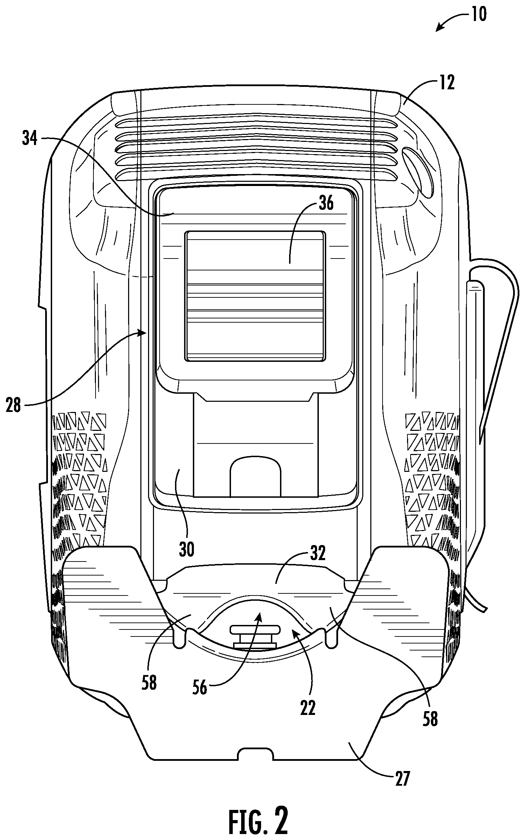

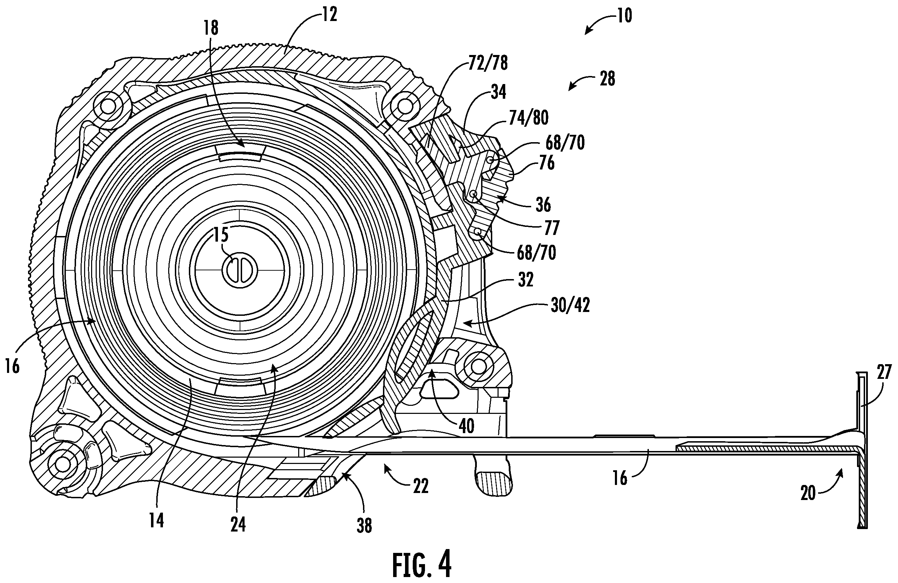

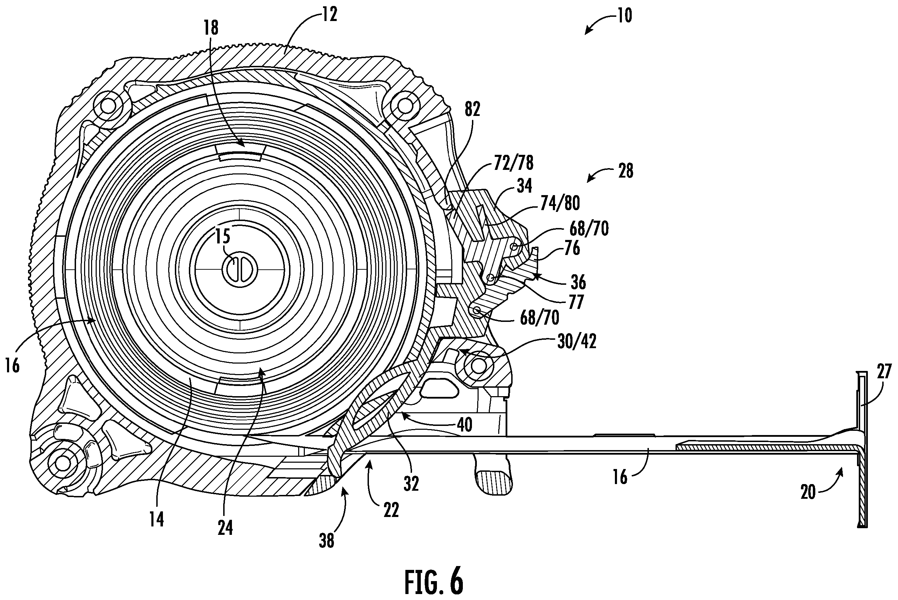

Referring to FIGS. 1-6, shown is a non-limiting embodiment of a tape measure that is generally designated 10. The tape measure 10 includes a housing 12 and a reel 14 that is rotatably mounted inside the housing 12 (best seen in the cross-sectional views of FIGS. 4 and 6). The reel 14 is mounted in the housing 12 by a reel spindle 15 that is secured within the housing 12 (FIGS. 4 and 6). An elongated tape rule blade 16 (hereafter "tape 16") is mounted on the reel 14.

The tape 16 is formed of a ribbon of metal, the preferred metal being steel, and the top concave surface of the tape is printed with measuring indicia, such as lines and digits (not shown) for measuring lengths and distances. A beginning longitudinal end 18 of the tape 16 is connected to the reel 14 and a free longitudinal end 20 of the tape 16 extends generally outwardly of the reel 14. The tape 16 is constructed and arranged with respect to the housing 12 to extend generally from a position tangential of the reel 14 outwardly through a spaced tape opening 22 provided in the housing 12.

Preferably the reel 14 is made of a molded plastic. The tape 16 is wrapped around the reel 14, with the beginning longitudinal end 18 fixed relative to the reel 14 for rotation therewith.

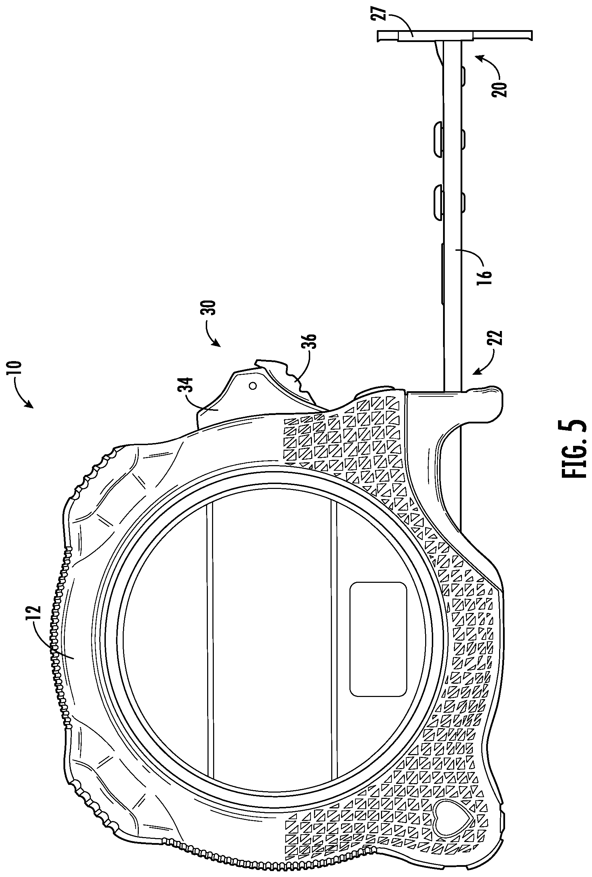

A coil spring 24 has an interconnection between the housing 12 and the reel 14 to rotate the reel 14 with respect to the housing 12 in a direction to wind the elongated tape 16 about the reel when the tape 16 is extending outwardly of the tape opening 22. In one embodiment, as best seen in FIG. 5, the tape 16 is connected to the reel 14 by virtue of the beginning end 18 of the tape within the housing 12 being connected to a terminal end of the spring 24 in a conventional, known manner with the spring 24 having a portion thereof (adjacent the connection with the tape 16) being pinned, clipped by a protruding reel portion to an outer periphery of the reel 14. Preferably the spring 24 is a thin, flat ribbon of metal, such as steel.

The tape 16 is generally movable between a fully retracted position outwardly of the housing 12 to a fully extended position. As the tape 16 is unwound from the reel 14, the coil spring 24 is wound around the rigidly fixed spindle 15. This winding of the spring 24 around the spindle 15 stores energy in the spring 24 to provide spring-powered rewinding of the tape 16 around the reel 14 when the extended tape is released.

According to aspects of the disclosure, the tape 16 is constructed of a ribbon of sheet metal that is shaped during the manufacturing to have a normal or memory configuration that has a generally arcuate or concavo-convex transverse cross-section. The tape 16 has a layer of paint or ink on both sides thereof, with the paint on the concave side of the tape 16 providing measuring indicia 26 (FIG. 1). In one embodiment, yellow paint is used for background, with black paint on top of the yellow for the numbers and gradations on the top of the tape. However, any combination of colors may be used.

The free end 20 of tape 16 terminates in a hook member 27 that protrudes out orthogonally from the tape 16. Preferably the hook member 27 is formed of sheet metal and is mounted on the free end 20 of the tape 16. The hook member 27 provides a surface to engage and fix the end of the tape 16 against a point to be measured from, so that a measurement can be made from the hook member 27 to a position on the tape 16 indicated by the measuring indicia 26.

When a portion of the normally concavo-convex cross-sectional tape 16 is wound about the reel 14, the wound portion has a flattened transverse cross-section and the wound layers of the coiled tape 16 provide the wound tape with an abutting volute coil configuration. It can therefore be understood, that when the tape 16 is wound around the reel 14, it has a flat cross-section and when the tape 16 is withdrawn from the housing 12 to measure an object, it returns to the concavo-convex cross-section.

The coil spring 24 is constructed and arranged between the housing 12 and the reel 14 to rotate the reel 14 about the spindle 15 with respect to the housing 12 in a direction to wind up the elongated tape 16 into the housing 12 when extending outwardly of the tape opening 22 in a normal concavo-convex cross-sectional configuration onto the reel 14 in an abutting volute coil formation in a flattened cross-sectional configuration. The concavo-convex cross-section provides the extended tape 16 with rigidity and maintains the tape essentially straight in the longitudinal direction.

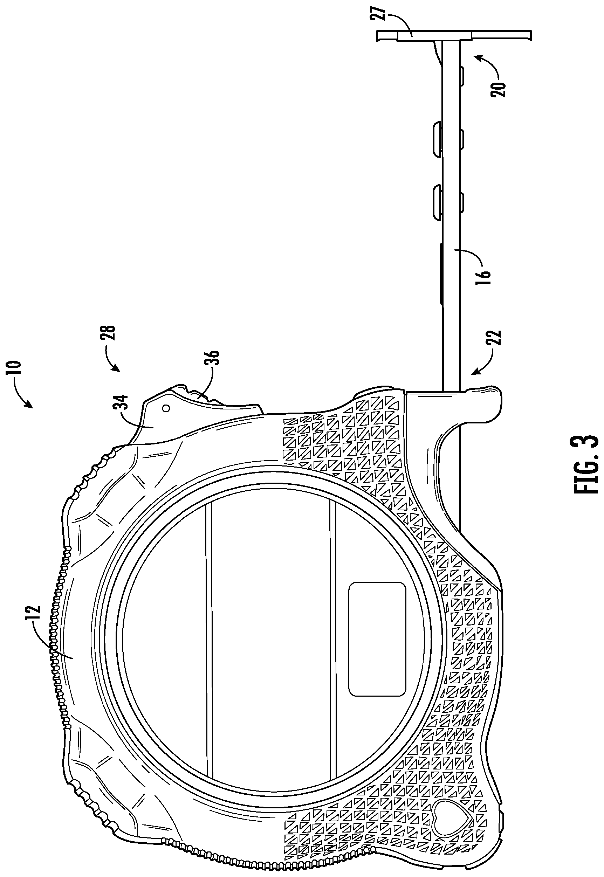

A slide lock, generally designated 28, is constructed and arranged to be manually actuated to hold the tape 16 in any position of extension outwardly of the tape opening 22 and to release the tape 16 from any position in which it is held. The structure and operation of the slide lock 28 is best appreciated from a comparison of FIGS. 3 and 4 to FIGS. 5 and 6. The slide lock 28 is mounted on the housing 12 for movement in opposite directions between a non-contact position (FIGS. 3 and 4) and a holding position (FIGS. 5 and 6). The slide lock 28 is movable between the non-contact position and the holding position along a track 30 formed on the outer surface of the housing 12.

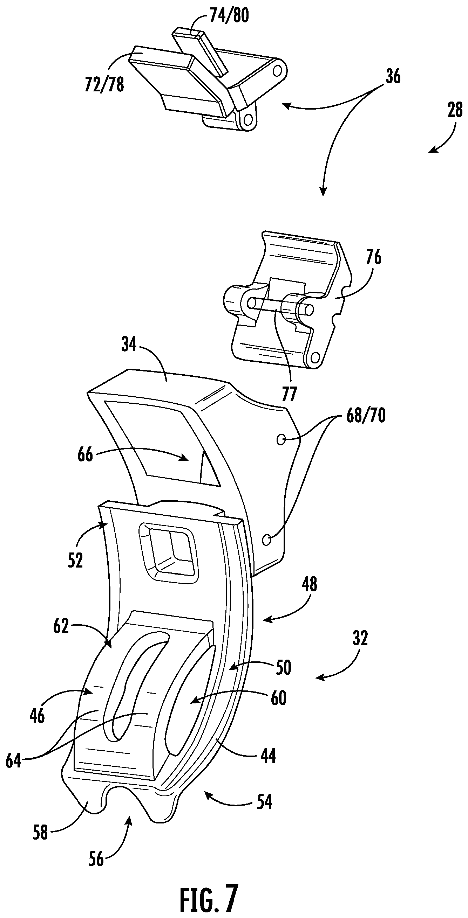

As shown in FIGS. 1-6 and in more detail in FIGS. 7-9, the slide lock 28 may be generally characterized as including a locking arm 32, a finger engaging member 34, and a release switch 36. As explained in further detail below, the locking arm 32 is movable into wedging engagement with the tape 16 to engage and hold the tape 16 against an interior holding structure 38 on the housing 12 when the slide lock 28 is in the holding position, while the finger engaging member 34 is configured to be actuated by a user to selectively move the slide lock 28 from the non-contact position to the holding position. The release switch 36 is positioned on the finger engaging member 34 and is actuatable between a lock position and a release position, to selectively retain the slide lock 28 in the holding position (when release switch 36 is in the lock position) and enable movement of the slide lock 28 from the holding position back to the non-contact position (when release switch 36 is in the release position).

According to embodiments, the locking arm 32 of slide lock 28 is configured as an arcuate member that is movable along an arcuate path between the non-contact position and the holding position. The arcuate locking arm 32 is an interior locking arm that is positioned within an interior cavity of the housing 12, with an outer surface 40 of the locking arm 32 having a contouring or curvature that generally matches that of an inner surface of the housing 12. The locking arm 32 (positioned within interior cavity of the housing 12) is joined with the finger engaging member 34 (positioned on an outer surface of the housing 12) through a slot 42 formed in the housing 12 in the area of track 30, to provide for movement of the slide lock 28 between the non-contact position and the holding position.

According to aspects of the disclosure, and as best shown in FIGS. 7-9, the locking arm 32 may comprise a main arm member 44 and a support arm member 46. The main arm member 44 has an outer surface 48 and an inner surface 50 and is curved outwardly in a first direction to give the locking arm 32 its arcuate shape, with the main arm member 44 movable along the arcuate path to move the slide lock 28 between the non-contact position and the holding position. The main arm member 44 comprises a fixed end portion 52 joined to the finger engaging member 34 and a free end portion 54 opposite from the fixed end portion 52. The free end portion 54 is movable into wedging engagement with the tape 16 to engage and hold the tape 16 when the slide lock 28 is in the holding position. In exemplary embodiments, the free end portion 54 that is movable into wedging engagement with the tape 16 includes a central recess 56 that defines two transversely spaced teeth 58 having spaced arcuate side surfaces sized to conform to the concave surface of the tape 16, with the pair of transversely spaced teeth 58 engaging the tape 16 when the slide lock 28 is in the holding position. In certain configurations, the main arm member 44 comprises an opening 60 formed therein that extends a majority of a distance between the free end portion 54 and a middle portion 62 of the main arm member 44.

The support arm member 46 is positioned on the inner surface 50 of the main arm member 44 and has an arcuate shape that curves inwardly in a second direction opposite from the first direction. The support arm member 46 extends between the free end portion 54 of the main arm member 44 and the middle portion 62 of the main arm member 44. In certain configurations, the support arm member 46 comprises a pair of spaced apart support arms 64, with the pair of spaced apart support arms 64 extending across the opening 60 of the main arm member 44.

According to aspects of the disclosure, movement of the main arm member 44 along the arcuate path and to the holding position applies a downward-directed force and an inward-directed force to the tape 16 when engaging and holding the tape 16 against the interior holding structure 38 on the housing 12, while the support arm member 46 applies another downward-directed force to the tape 16 as the main arm member 44 engages and holds the tape 16 against the interior holding structure 38 on the housing 12. The downward-directed force applied by the support arm member 46 is combined with the downward-directed force applied by the main arm member 44, to provide an increased overall downward-directed force applied to the tape 16 that better enables the locking arm 32 to engage and hold the tape 16 against the interior holding structure 38 on the housing 12 when the slide lock 28 is in the holding position.

According to aspects of the disclosure, the opening 60 provided in locking arm 32 and the reverse arcuate shape of support arm member 46 (i.e., of spaced apart support arms 64) reduces a magnitude of the inward-directed force applied to the tape 16 by the main arm member 44 when engaging and holding the tape 16 against the interior holding structure 38 on the housing 12, when the slide lock 28 is in the holding position. A reduction of the inward-directed force applied to the tape 16 when actuating the slide lock 28 to the holding position helps to prevent an inward movement of the tape 16 back into the housing 12 as the free end portion 54 of main arm member 44 is moved into wedging engagement with the tape 16.

According to embodiments of the disclosure, the finger engaging member 34 of slide lock 28 may be integrally formed with locking arm 32 or mechanically connected thereto, with a connection between the finger engaging member 34 and locking arm 32 positioned within the slot 42 to enable movement of the slide lock 28 along track 30. The finger engaging member 34 may have an exterior surface configured to receive and engage a finger (e.g., thumb) of a user, with the exterior surface including recessed grooves, protruding grooves, and/or a concave engagement surface, as non-limiting examples, that facilitates engagement with a finger of the user. The finger engaging member 34 also includes an opening 66 formed therein/therethrough within which and through which the release switch 36 is positioned, with the release switch 36 retained within the opening 66 so as to be surrounded by the finger engaging member 34. One or more pin holes 68 may further be provided in finger engaging member 34 that are configured to receive one or move pivot pins 70 that pivotably connect the release switch 36 to the finger engaging member 34, with the release switch 36 pivoting about the pivot pin(s) 70 between the lock position and the release position.

As indicated above, the release switch 36 is positioned on the finger engaging member 34 and is actuatable between a lock position and a release position, to selectively retain the slide lock 28 in the holding position (when release switch 36 is in the lock position) and enable movement of the slide lock 28 from the holding position back to the non-contact position (when release switch 36 is in the release position). With the release switch 36 in the lock position, the release switch 36 engages the housing 12 to retain the slide lock 28 in the holding position and, with the release switch 36 in the release position, the release switch 36 disengages from the housing 12 to enable movement of the slide lock 28 from the holding position back to the non-contact position.

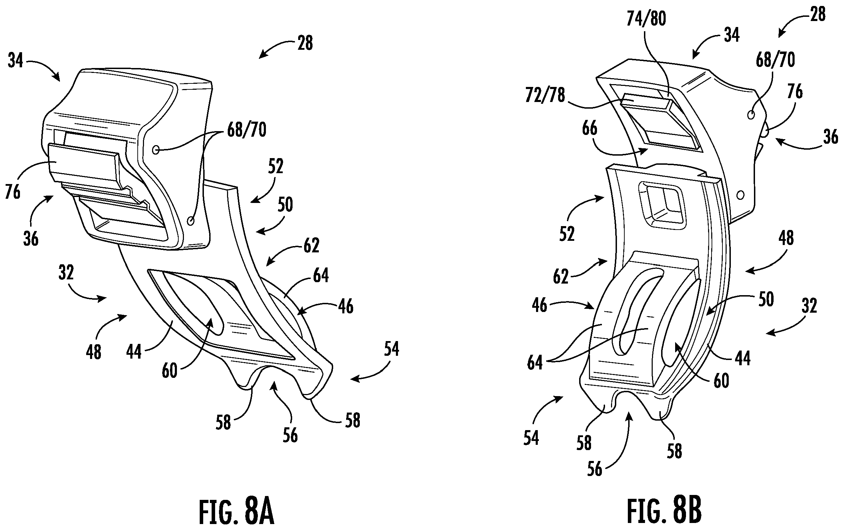

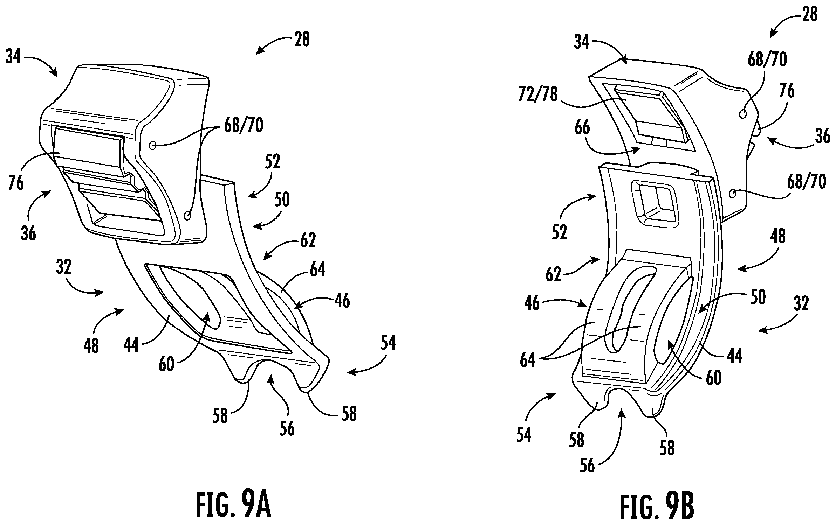

According to embodiments of the disclosure, the release switch 36 comprises a housing engagement member 72, a biasing member 74, and a button 76 depressible by the user, wherein depression of the button 76 causes a corresponding movement of the housing engagement member 72 and the biasing member 74, to actuate the release switch 36 between the lock position and the release position, as best shown in FIGS. 8A and 8B and FIGS. 9A and 9B. In certain configurations, the release switch 36 may comprise an integrally formed switch, with the housing engagement member 72, the biasing member 74, and the button 76 formed as a single, unitary component. In other configurations, the release switch 36 may be formed from multiple components joined together. When formed as separate components, the housing engagement member 72 and biasing member 74 may be provided on a first piece or component while the button 76 may be provided on a second piece or component, with the first piece/component and second piece/component mechanically coupled together via a pivot pin 77.

According to embodiments of the disclosure, the housing engagement member 72 of release switch 36 may comprise an engagement arm 78 and the biasing member 74 of release switch 36 may comprise a biasing arm 80. The biasing arm 80 is formed as a flexible arm that is configured to deflect from a default position to a deflected position, responsive to depression of the button 76 by a user. When the slide lock 28 is in the non-contact position, the release switch 36 is in the release position, with the engagement arm 78 positioned on an outer surface of the track 30 and riding along the track 30 and the biasing arm 80 in the default position. When the slide lock 28 is moved from the non-contact position to the holding position (with the biasing arm 80 in the default position), the engagement arm 78 is biased inwardly (see FIGS. 8A and 8B) toward housing 12 to snap into the slot 42 and engage a snap point 82 of the housing 12 (FIG. 5), to secure the slide lock 28 in the holding position and prevent movement of the slide lock 28 back to the non-contact position. In order to enable movement of the slide lock 28 from the holding position back to the non-contact position, the button 76 may be depressed - with depression of the button 76 actuating the biasing arm 80 to the deflected position and causing the engagement arms 78 to move outwardly (see FIGS. 8A and 8B) relative to housing 12, to disengage from the snap point 82 of the housing 12.

With slide lock 28 structured as described above, the slide lock 28 may be operated as follows to selectively lock the tape 16 in an extended position and selectively release the tape, to provide for retraction of the tape 16 back into the housing 12.

To lock the tape 16 in a given position of extension, the user (while holding the tape 16 outwardly of the housing 12 against the spring force of the coil spring 24) engages the finger engaging member 34 and slides the slide lock 28 downwardly along the track 30. As the slide lock 28 is moved from the non-contact position to the holding position, the engagement arm 78 on release switch 36 is biased to snap into the slot 42 formed in housing 12 and engage the snap point 82 of the housing 12, to secure the slide lock 28 in the holding position and prevent movement of the slide lock 28 back to the non-contact position. Also, as the slide lock 28 is moved from the non-contact position to the holding position, the free end portion 54 of locking arm 32 is moved into wedging engagement with the tape 16 to hold the tape 16 in place against the spring force of the coil spring 24. As described above, in some embodiments a downward-directed force may be applied by each of the main arm member 44 and the support arm member 46 of locking arm 32, to provide an increased overall downward-directed force applied to the tape 16 that better enables the locking arm 32 to engage and hold the tape 16 against the interior holding structure 38 on the housing 12 when the slide lock 28 is moved to the holding position. In some embodiments, it is recognized that the interior holding structure 38 may comprise a series of ribs that are constructed and arranged to support the convex side of the tape 16. The top surfaces of the ribs are transversely spaced in a concave array to receive and support the convex side of the tape 16.

To release the tape 16, the user first depresses the button 76 of release switch 36, with depression of the button 76 actuating the biasing arm 80 of release switch 36 to the deflected position and causing the engagement arms 78 of release switch 36 to disengage from the snap point 82 of the housing 12, thereby enabling movement of the slide lock 28 back to the non-contact position. Upon depression of the button 76 of release switch 36, the user then pulls upwardly on the finger engaging member 34, which causes the slide lock 28 to move upwardly within track 30 and moves the free end portion 54 of locking arm 32 out of wedging engagement with the tape 16 in the manner described above.

It can be understood that the use of the slide lock 28 (and locking arm 32 thereof) when a measurement is being taken is optional. That is, when taking a measurement, the user typically holds the housing 12 in one hand and manually pulls the tape 16 out of the housing 12 with the other hand. When a sufficient length of tape 16 has been withdrawn from the housing 12, the user can lock the tape 16 with respect to the housing 12 using the locking arm 32 of slide lock 28 to prevent the tape 16 from retracting back into the housing 12 (under the spring force of spring 24) when the user releases the tape 16. When the measurement has been taken, the user may release the locking arm 32 from holding engagement with the tape 16 by moving the free end portion 54 thereof out of wedging engagement with the tape 16 in the manner described above. If the locking arm 32 is not used during the taking of a measurement, the user can simply hold the tape 16 with his other hand while the measurement is being taken or, alternatively, the hook member 27 can be placed in hooking engagement with the workpiece to hold the tape 16 outwardly of the housing 12 in a controlled and steady manner against the spring force of spring 24 while the measurement is being taken. When the tape 16 is released after taking the measurement, the spring 24 rotates the reel 14 with respect to the housing 12 in a tape-winding direction to wind the tape 16 around the reel 14.

One skilled in the art will understand that the embodiment of the tape measure 10 shown in the figures and described above is exemplary only and not intended to be limiting. It can be appreciated that it is contemplated to use any of the aforementioned features singly or in any appropriate combination on a tape measure that has a spring-powered retractable blade or, alternatively, on any tape measure in which the blade is manually retracted.

Although the invention has been described in detail for the purpose of illustration based on what is currently considered to be the most practical and preferred embodiments, it is to be understood that such detail is solely for that purpose and that the invention is not limited to the disclosed embodiments, but, on the contrary, is intended to cover modifications and equivalent arrangements that are within the spirit and scope inventions more specifically understood in the context of the above disclosure. Therefore, this invention includes all modifications encompassed within the spirit and scope of the following claims.

## Claims

1. A tape measure comprising:
a housing;
a reel rotatably mounted in the housing;
an elongated tape arranged to be wound on the reel and to be extendable through a tape opening formed in the housing; and
a slide lock operable to hold the tape in any position of extension outwardly of the tape opening and to release the tape from any position in which it is held, the slide lock mounted on the housing for movement in opposite directions between a non-contact position and a holding position, wherein the slide lock includes:
a locking arm movable into wedging engagement with the tape to engage and hold the tape against an interior holding structure on the housing when the slide lock is in the holding position;
a finger engaging member configured to be actuated by a user to selectively move the slide lock from the non-contact position to the holding position; and
a release switch positioned on the finger engaging member and being actuatable between a lock position and a release position;
wherein with the release switch in the lock position, the release switch engages the housing to retain the slide lock in the holding position; and
wherein with the release switch in the release position, the release switch disengages from the housing, to enable movement of the slide lock from the holding position back to the non-contact position.

2. The tape measure of claim 1, wherein the release switch comprises a housing engagement member, a biasing member, and a button depressible by the user, wherein depression of the button causes a corresponding movement of the housing engagement member and the biasing member, to actuate the release switch between the lock position and the release position; wherein:
optionally, the release switch comprises a first piece comprising the housing engagement member and the biasing member, and a second piece comprising the button, with the first piece and second pivotably connected via a pivot pin; and/or
optionally, the slide lock further comprises a pivot pin that pivotably connects the release switch to the finger engaging member, with the release switch pivoting between the lock position and the release position.

3. The tape measure of claim 2, wherein the housing engagement member comprises an engagement arm and the biasing member comprises a biasing arm.

4. The tape measure of claim 3, wherein the biasing arm comprises a flexible arm that is configured to deflect from a default position to a deflected position, responsive to depression of the button by the user.

5. The tape measure of claim 4, wherein when the slide lock is moved to the holding position and the biasing arm is in the default position, the engagement arm is biased to engage a snap point of the housing, to secure the slide lock in the holding position, and wherein when the button is depressed to actuate the biasing arm to the deflected position, the engagement arms are disengaged from the snap point of the housing, to enable movement of the slide lock from the holding position to the non-contact position.

6. The tape measure of claim 5, wherein the locking arm comprises an interior locking arm positioned within an interior cavity of the housing and the actuating member comprises an exterior actuating member positioned on an outer surface of the housing, with the housing comprising a slot within which a portion of the slide lock is positioned and that provides for movement of the slide lock from the non-contact position to the holding position.

7. The tape measure of claim 6, wherein the housing comprises a track within which the slide lock slides to move from the non-contact position to the holding position, with the slot formed within the track, wherein optionally, with the slide lock in the non-contact position, the engagement arm are positioned on an outer surface of the track and ride along the track, and wherein when the slide lock is moved to the holding position with the biasing arm in the default position, the engagement arm is biased to snap into the slot and engage the snap point of the housing, thereby preventing movement of the slide lock back to the non-contact position.

8. The tape measure of any of the preceding claims, wherein the locking arm comprises an arcuate arm having a contouring generally matching that of an inner surface of the housing.

9. The tape measure of any of the preceding claims, wherein the release switch extends through an opening formed in the finger engaging member, with the release switch surrounded by the finger engaging member.

10. A tape measure comprising:
a housing;
a reel rotatably mounted in the housing;
an elongated tape arranged to be wound on the reel and to be extendable through a tape opening formed in the housing; and
a slide lock operable to hold the tape in any position of extension outwardly of the tape opening and to release the tape from any position in which it is held, the slide lock mounted on the housing for movement in opposite directions between a non-contact position and a holding position, wherein the slide lock includes:
a locking arm movable into wedging engagement with the tape to engage and hold the tape against an interior holding structure on the housing when the slide lock is in the holding position; and
a finger engaging member configured to be actuated by a user to selectively move the slide lock from the non-contact position to the holding position;
wherein the locking arm comprises:
a main arm member having an arcuate shape and being movable along an arcuate path to move the slide lock between the non-contact position and the holding position, the main arm member having an outer surface and an inner surface and being curved outwardly in a first direction; and
a support arm member positioned on the inner surface of the main arm member, the support arm member having an arcuate shape and being curved inwardly in a second direction opposite from the first direction.

11. The tape measure of claim 10, wherein the main arm member comprises a fixed end portion joined to the finger engaging member and a free end portion opposite from the fixed end portion, with the free end portion movable into wedging engagement with the tape to engage and hold the tape when the slide lock is in the holding position.

12. The tape measure of claim 11, wherein the support arm member extends between the free end portion and a middle portion of the main arm member that is between the fixed end portion and the free end portion.

13. The tape measure of claim 12, wherein movement of the main arm member along the arcuate path and to the holding position applies a downward-directed force and an inward-directed force to the tape when engaging and holding the tape against the interior holding structure on the housing, and wherein the support arm member applies another downward-directed force to the tape as the main arm member engages and holds the tape against the interior holding structure on the housing, with the another downward-directed force adding to the downward-directed force to engage and hold the tape against the interior holding structure on the housing when the slide lock is in the holding position.

14. The tape measure of claim 13, wherein the main arm member comprises an opening formed therein extending a majority of a distance between the middle portion and the free end portion; wherein:
optionally, the support arm member comprises a pair of spaced apart support arms, with the pair of spaced apart support arms extending across the opening of the main arm member; and/or
optionally, the opening reduces a magnitude of the inward-directed force applied to the tape when engaging and holding the tape against the interior holding structure on the housing when the slide lock is in the holding position.

15. The tape measure of any of claims 11 to 14, wherein the free end portion comprises a pair of transversely spaced teeth defining a central recess, the pair of transversely spaced teeth engaging the tape when the slide lock is in the holding position.
